(19) Europäisches Patentamt
European Patent Office
Office européen des brevets

(11) Veröffentlichungsnummer: **0 433 989 B1**

(12) **EUROPÄISCHE PATENTSCHRIFT**

(45) Veröffentlichungstag der Patentschrift: **10.05.95**

(51) Int. Cl.⁶: **C08F 297/08**, C08L 23/16

(21) Anmeldenummer: **90124594.4**

(22) Anmeldetag: **18.12.90**

# (54) Verfahren zur Herstellung einer Polypropylen-Formmasse.

(30) Priorität: **21.12.89 DE 3942363**

(43) Veröffentlichungstag der Anmeldung:
**26.06.91 Patentblatt 91/26**

(45) Bekanntmachung des Hinweises auf die Patenterteilung:
**10.05.95 Patentblatt 95/19**

(84) Benannte Vertragsstaaten:
**BE DE ES FR GB IT NL**

(56) Entgegenhaltungen:
**EP-A- 0 135 834**
**EP-A- 0 344 887**
**EP-A- 0 405 201**

(73) Patentinhaber: **HOECHST AKTIENGESELL-SCHAFT**

**D-65926 Frankfurt (DE)**

(72) Erfinder: **Schreck, Michael, Dr.**
**Rauenthaler Weg 32**
**W-6000 Frankfurt am Main (DE)**
Erfinder: **Winter, Andreas, Dr.**
**Taunusblick 10**
**W-6246 Glashütten (DE)**
Erfinder: **Dolle, Volker, Dr.**
**Hattersheimer Strasse 15**
**W-6233 Kelkheim (Taunus) (DE)**
Erfinder: **Kondoch, Hartmut, Dr.**
**Loreleistrasse 101**
**W-6230 Frankfurt am Main (DE)**
Erfinder: **Antberg, Martin, Dr.**
**Sachsenring 10**
**W-6238 Hofheim am Taunus (DE)**
Erfinder: **Rohrmann, Jürgen, Dr.**
**Die Ritterwiesen 10**
**W-6237 Liederbach (DE)**

**EP 0 433 989 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur Herstellung einer Polypropylen-Formmasse, wobei in der ersten Stufe ein überwiegend kristallines, isotaktisches Propylenhomo- oder -copolymer und in der zweiten Stufe ein statistisches Copolymer von Propylen mit Ethylen und gegebenenfalls einem zweiten 1-Olefin sowie ein teilweise kristallines Polymer des zweiten 1-Olefins erzeugt wird.

In EP-A-405 201 wird eine syndiotaktische Polypropylen-Formmasse beschrieben. In EP-A-344 887 wird eine siliziumverbrückte Übergangsmetallverbindung zur Polymerisation von alpha-Olefinen beschrieben.

Isotaktisches Polypropylen kann zu Formkörpern verarbeitet werden, die vorteilhafte mechanische Eigenschaften aufweisen, vor allem hohe Härte, Steifigkeit sowie Formbeständigkeit auch bei höheren Temperaturen. Für viele Anwendungen wirkt sich auch die gute Spannungsrißbeständigkeit günstig aus. Nachteilig ist dagegen die hohe, oberhalb von 0 °C liegende Einfriertemperatur der amorphen Bestandteile des Polypropylens. Sie bewirkt ein starkes Absinken von Schlagfestigkeit, Reiß- und Biegefestigkeit der aus isotaktischem Polypropylen hergestellten Gegenstände mit sinkender Temperatur, insbesondere unterhalb von 0 °C.

Es ist daher zweckmäßig, isotaktischem PP eine Komponente zuzufügen, deren Einfriertemperatur unterhalb der später zu erwartenden Gebrauchstemperaturen bis hinunter zu -40 °C liegt. Dies versucht man zu erreichen durch Zusatz von Komponenten mit möglichst tiefer Einfriertemperatur, wobei vor allem Ethylen-Propylen-Copolymere oder Polyethylen sowie Kombinationen davon dem Polypropylen zugesetzt werden. Derartige Mischungen lassen sich herstellen durch Zusammenbringen der Einzelbestandteile in Walzwerken, Knetern oder Extrudern.

Sie entstehen aber auch bei verschiedenen Methoden der Blockcopolymerisation mit Ziegler-Natta-Katalysatoren.

Diese Verfahren der Blockcopolymerisation sind besonders vorteilhaft, weil die Polymermischung mit verbesserter Schlagfestigkeit und Zähigkeit in Pulverform anfällt und das Granulieren vor ihrer Weiterverarbeitung unter Umständen vermieden werden kann.

Es ist bekannt, mit Hilfe von Ziegler-Natta-Katalysatoren in einer mehrstufigen Polymerisation ein Polymer mit verbesserter Schlaggzähigkeit, insbesondere bei niedrigen Temperaturen, herzustellen, wobei die Härte des Polypropylens weitgehend erhalten bleibt. Polymere dieses Typs sind eine innige Mischung der verschiedenen Komponenten und werden allgemein Blockcopolymere genannt.

Die Herstellung solcher Blockcopolymere mit Hilfe von Ziegler-Katalysatoren auf $MgCl_2$-Trägerbasis ist bekannt (vgl. EP-A-0 135 834, US 4,576,994).

Ziel ist die Erzeugung eines Copolymeren in der zweiten Stufe, wobei der Einfrierbereich der nicht kristallinen Anteile dieser Copolymeren möglichst tief liegen und innerhalb eines engen Bereiches erfolgen sollte, da dies eine ausgezeichnete Schlagzähigkeit schon bei tiefen Temperaturen erwarten läßt.

Es wurde nun gefunden, daß Blockcopolymere mit ausgezeichneter Fließfähigkeit, deren amorphe Anteile erst bei sehr tiefen Temperaturen und innerhalb eines engen Temperaturintervalls einfrieren, besonders vorteilhaft hergestellt werden können, wenn man zu ihrer Herstellung ein Metallocen-Katalysatorsystem verwendet.

Die Erfindung betrifft somit ein Verfahren zur Herstellung einer Polypropylen-Formmasse, bestehend aus

(1) 20 bis 99 Gew.-% eines kristallinen, isotaktischen Polymers, welches zu mindestens 95 Gew.-% aus polymerisiertem Propylen besteht,

(2) 1 bis 80 Gew.-% eines nicht kristallinen Ethylen-Propylen-Copolymeren mit einem Ethylengehalt von 20 bis 90 Gew.-%,

wobei man zunächst in einer oder mehreren Stufen in flüssigem Propylen bei einer Verweilzeit von 15 bis 400 Minuten, einem Druck von 5 bis 100 bar und einer Temperatur von 0 bis 100 °C das Polymer (1) und in einer zweiten Stufe bei einer Verweilzeit von 10 bis 180 Minuten, einem Druck von 5 bis 49 bar und einer Temperatur von 0 bis 100 °C in Gegenwart von Ethylen das Polymer (2) herstellt, in Suspension, in Gegenwart eines Katalysators, welcher aus einer Übergangsmetallverbindung und einer aluminiumorganischen Verbindung besteht, dadurch gekennzeichnet, daß die Polymerisation in der zweiten Stufe in Lösung oder in Suspension stattfindet, daß die Übergangsmetallverbindung ein Metallocen der Formel I

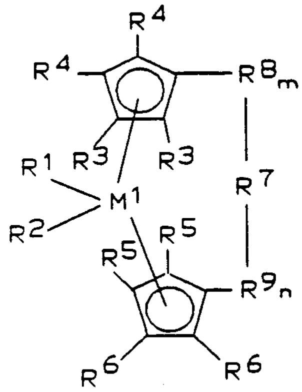

(I)

ist, worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$, $R^4$, $R^5$ und $R^6$ | gleich oder verschieden sind und ein Wasserstoffatom, ein Halogenatom, eine $C_1$-$C_{10}$-Alkylgruppe, $-NR^{10}_2$, $-SR^{10}$, $-OSiR^{10}_3$, $-SiR^{10}_3$ oder $PR^{10}_2$, worin $R^{10}$ ein Halogenatom oder eine $C_1$-$C_{10}$-Alkylgruppe ist, bedeuten, oder je zwei benachbarte $R^3$, $R^4$, $R^5$ oder $R^6$ mit den sie verbindenden C-Atomen einen Ring bilden, |
| $R^7$ | |

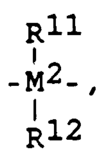, 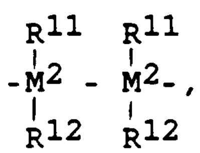, 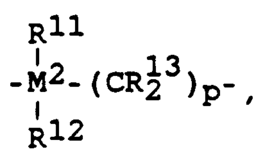, 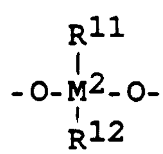, 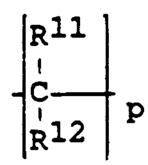

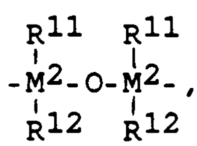, 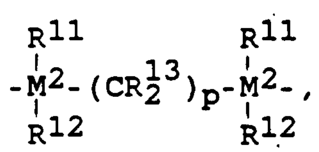, 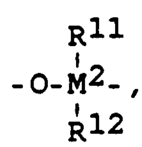, 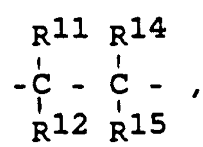,

| | |
|---|---|
| | $=BR^{11}$, $=AlR^{11}$, -Ge-, -Sn-, -O-, -S-, $=S=O$, $=SO_2$, $=NR^{11}$, $=CO$, $=PR^{11}$ oder $=P(O)R^{11}$ ist, wobei |
| $R^{11}$, $R^{12}$, $R^{13}$, $R^{14}$ und $R^{15}$ | gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silicium, Germanium oder Zinn ist, |
| p | 1, 2 oder 3 ist, |
| $R^8$ und $R^9$ | gleich oder verschieden sind und eine Gruppe $=CR^{11}R^{12}$, worin $R^{11}$ und $R^{12}$ die obengenannte Bedeutung haben, bedeuten und |
| m und n | gleich oder verschieden und null, 1 oder 2 sind, wobei m + n null, 1 oder 2 ist, |

und die aluminiumorganische Verbindung ein Aluminoxan der Formel II ist

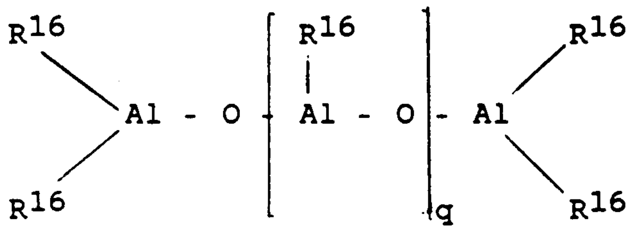

(II)

für den linearen Typ und/oder der Formel III

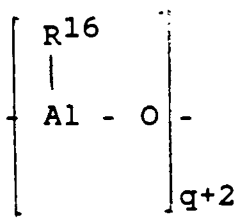

(III)

für den cyclischen Typ, worin $R^{16}$ eine $C_1$-$C_6$-Alkylgruppe, und q eine ganze Zahl von 2 bis 50, bedeuten.

Der für das erfindungsgemäße Verfahren zu verwendende Katalysator besteht aus einer Metallocenverbindung der Formel I und einem Aluminoxan. In Formel I

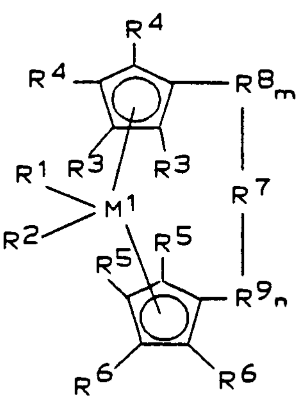

(I)

ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon und Hafnium.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$, $R^4$, $R^5$ und $R^6$ sind gleich oder verschieden, vorzugsweise verschieden, und bedeuten ein Wasserstoffatom, ein Halogenatom, vorzugsweise Fluor-, Chlor- oder Bromatom, eine $C_1$-$C_{10}$-, vorzugsweise $C_1$-$C_3$-Alkylgruppe, $NR^{10}_2$ , $-SR^{10}$, $-OSiR^{10}_3$ , $-SiR^{10}_3$ , oder $PR^{10}_2$ , worin $R^{10}$ ein Halogenatom, vorzugsweise Chloratom, oder eine $C_1$-$C_{10}$-, vorzugsweise $C_1$-$C_3$-Alkylgruppe bedeutet, oder je zwei benachbarte $R^3$, $R^4$, $R^5$ oder $R^6$ bilden mit den sie verbindenden C-Atomen einen Ring.

$R^7$ ist

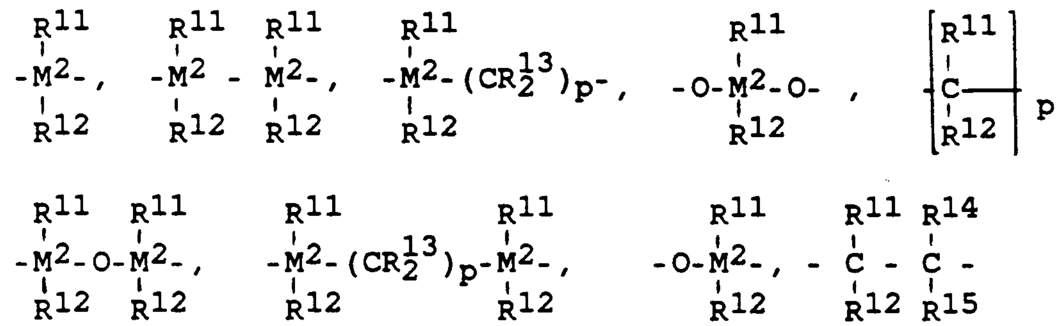

$=BR^{11}$, $=AlR^{11}$, -Ge-, -Sn-, -O-, -S-, $=S=O$, $=SO_2$, $=NR^{11}$, $=CO$, $=PR^{11}$ oder $=P(O)R^{11}$, wobei $R^{11}$, $R^{12}$, $R^{13}$, $R^{14}$ und $R^{15}$ gleich oder verschieden sind und ein Wasserstoffatom, ein Halogenatom, eine $C_1$-$C_{10}$-Alkylgruppe, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe, bedeuten oder $R^{11}$ und $R^{12}$ oder $R^{11}$ und $R^{13}$ bilden jeweils zusammen mit den sie verbindenden Atomen einen Ring.

| | |
|---|---|
| $M^2$ | ist Si, Ge oder Sn und p ist 1, 2 oder 3, |
| $R^7$ | ist vorzugsweise $=SiR^{11}R^{12}$, $-=GeR^{11}R^{12}$, -S-, $=S=O$ oder $=PR^{11}$, |
| $R^8$ und $R^9$ | sind gleich oder verschieden und bedeuten eine Gruppe $=CR^{11}R^{12}$, worin $R^{11}$ und $R^{12}$ die obengenannte Bedeutung haben, |
| m und n | sind gleich oder verschieden und bedeuten null, 1 oder 2, wobei m + n null, 1 oder 2 ist. Vorzugsweise sind m und n null oder 1. |

Die vorstehend beschriebenen Metallocene können nach folgendem Reaktionsschema hergestellt werden:

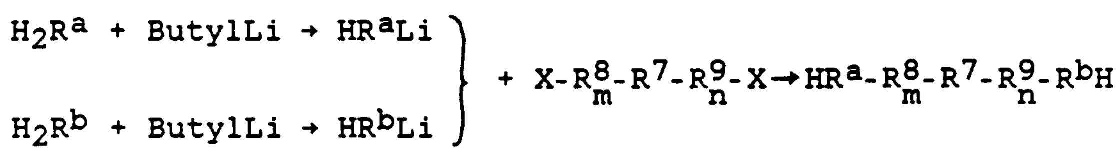

(X = Cl, Br,J, O-Tosyl, $HR^a$ = 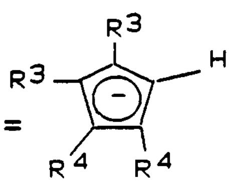 ,$HR^b$ = 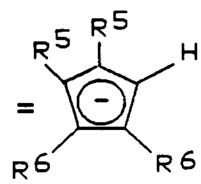 )

$HR^a\text{-}R^8_m\text{-}R^7\text{-}R^9_n\text{-}R^bH$ + 2 ButylLi → $LiR^a\text{-}R^8_m\text{-}R^5\text{-}R^9_n\text{-}R^bLi$

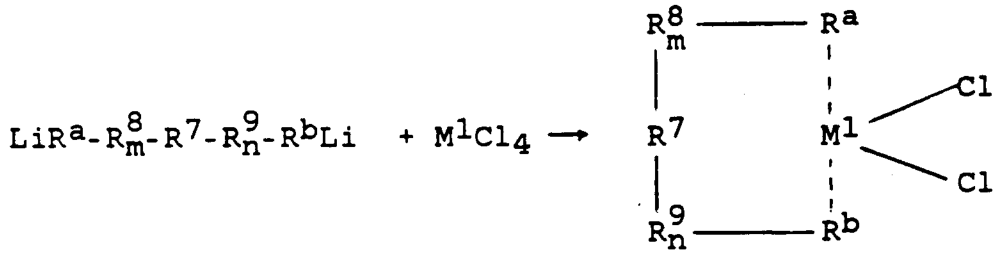

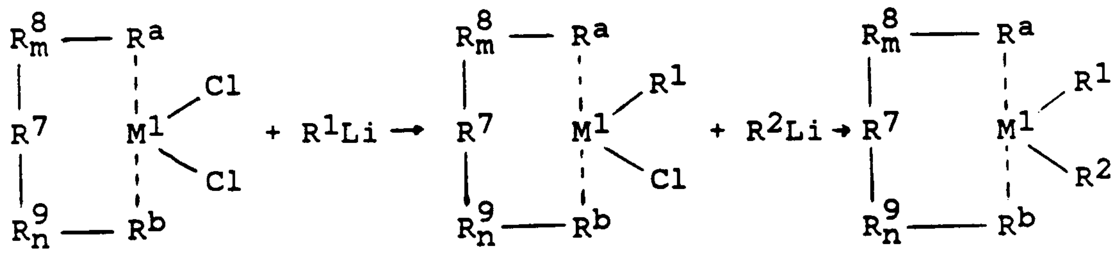

Die besonders bevorzugt eingesetzten Metallocenverbindungen sind rac-Ethylenbisindenylhafniumdichlorid, rac-Dimethylsilylbisindenylhafniumdichlorid, rac-Phenyl(methyl)silylbisindenylhafniumdichlorid und rac-Dimethylsilylbisindenylzirkoniumdichlorid

Der Aktivator ist ein Aluminoxan der Formel (II)

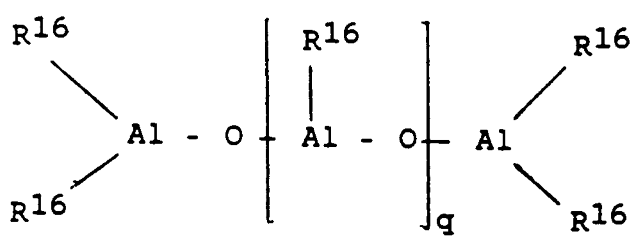

(II)

für den linearen Typ und/oder der Formel (III)

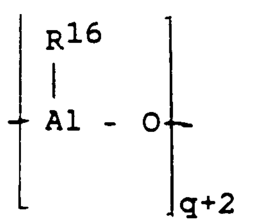

(III)

für den cyclischen Typ. In diesen Formeln bedeuten $R^{16}$ eine $C_1$-$C_6$-Alkylgruppe, vorzugsweise Methyl, Ethyl oder Isobutyl, insbesondere Methyl, und g eine ganze Zahl von 2 bis 50, bevorzugt 10 bis 40. Die exakte Struktur des Aluminoxans ist jedoch nicht gesichert, die Formeln II und III sind daher nur Näherungsformeln.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Messung der Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ -1 mol pro mol Aluminoxan eingesetzt. Die Voraktivierungszeit beträgt 5 Minuten bis 60 Stunden, vorzugsweise 10 bis 60 Minuten. Man arbeitet bei einer Temperatur von -78 °C bis 100 °C, vorzugsweise 0 bis 70 °C.

Eine deutlich längere Voraktivierungszeit ist möglich und kann zu Lagerzwecken durchaus sinnvoll sein.

Die Homopolymerisation wird in bekannter Weise in Lösung, in Suspension oder in der Gasphase, kontinuierlich oder diskontinuierlich, ein- oder mehrstufig bei einer Temperatur von 0 bis 100 °C, vorzugsweise 40 bis 85 °C durchgeführt. Der Druck beträgt 5 bis 100 bar. Bevorzugt ist die Polymerisation in dem technisch besonders interessanten Druckbereich von 5 bis 60 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Bevorzugt wird das zu polymerisierende Monomere als Lösemittel oder Suspensionsmittel eingesetzt. Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren wird in zwei Stufen durchgeführt, wobei in der ersten Stufe ein hochkristallines, isotaktisches Polypropylen oder mit einer geringen Menge eines anderen 1-Olefins als Comonomer modifiziertes Polypropylen und in der zweiten Stufe ein Ethylen-Propylen-Copolymer sowie ein kristallines, zum überwiegenden Teil aus Ethylen gebildetes Polymer hergestellt wird.

Beide in der zweiten Reaktionsstufe gebildeten Polymeren können durch ein weiteres 1-Olefin modifiziert sein.

Die Durchführung der Polymerisation in der ersten Reaktionsstufe geschieht bevorzugt in der Weise, daß flüssiges Propylen, eine Lösung des festen Katalysatoranteils in einem Lösemittel sowie die weiteren

flüssigen Katalysatorbestandteile in ein geeignetes Reaktionsgefäß gepumpt werden. Dieses Reaktionsgefäß kann ein Autoklav, ein üblicher Reaktionskessel oder ein Rohrreaktor in Schleifenform sein, wobei wie üblich durch eingebaute Rührer oder Umwälzpumpen für eine ausreichende Durchmischung gesorgt wird.

Die Abführung der Reaktionswärme erfolgt durch Mantelkühlung, durch in die Gefäße eingebaute Innenkühlung oder auch durch Siedekühlung.

Das flüssige Propylen selbst, das sowohl als Monomer wie auch als Suspensionsmittel dient, kann wechselnde Mengen an inerten, niedrigsiedenden, gelösten Bestandteilen enthalten, wie z.B. Propan oder Stickstoff.

In der ersten Reaktionsstufe wird eine Reaktionstemperatur von 0 bis 100 °C, bevorzugt eine solche von 40 bis 85 °C eingehalten. Der Druck beträgt 5 bis 100 bar, vorzugsweise 5 bis 60 bar.

Die Einstellung der gewünschten Molmasse des Copolymeren kann durch Zugabe von Wasserstoff zum Propylen erfolgen.

Die Menge des in der ersten Stufe hergestellten Polymeren beträgt, bezogen auf das ganze bei dem Verfahren entstehende feste Polymer, 20 bis 99 Gew.-%, vorzugsweise 40 bis 95 Gew.-%, insbesondere 60 bis 95 Gew.-%.

Falls in der ersten Stufe ein mit geringen Mengen eines anderen 1-Olefins als Comonomer modifiziertes Polypropylen hergestellt werden soll, wird das Comonomere wie die anderen Ausgangsprodukte dosiert. Als andere 1-Olefine kommen Ethylen und bis zu 5 Mol-% einfach ungesättigte Kohlenwasserstoffe mit 4 bis 10 Kohlenstoffatomen in Frage, vorzugsweise Ethylen und Buten, insbesondere Ethylen. Die Konzentration des Ethylens oder 1-Olefins im flüssigen Propylen beträgt dabei 0 bis 20 Mol-%. Das Polymere aus der ersten Stufe besteht zu mindestens 95 Gew.-% aus polymerisiertem Propylen.

Die in der ersten Stufe entstandene Polymersuspension, die im wesentlichen das überwiegend kristalline, isotaktische Polypropylen, das gegebenenfalls mit geringen Mengen eines 1-Olefins modifiziert ist, die aktiven Katalysatorbestandteile, flüssiges Propylen, gewisse Mengen an Wasserstoff sowie gegebenenfalls inerte Anteile enthält, wird nunmehr in die zweite Reaktionsstufe überführt.

Zu Beginn der zweiten Stufe wird Ethylen oder ein Ethylen/Propylengemisch und gegebenenfalls als weiteres Monomeres ein 1-Olefin mit 4 bis 10 C-Atomen in die Suspension eingeleitet, bis eine angestrebte Zusammensetzung des Monomerengemisches erreicht ist.

Während der gesamten Polymerisationsdauer in der zweiten Stufe wird durch permanentes Einleiten von Ethylen und/oder eines Propylen/Ethylengemisches, wie es nach der Aufarbeitung der Reaktionslösung anfällt, eine gewünschte Zusammensetzung des Monomerengemisches aufrechterhalten. Gegebenenfalls kann ein weiteres 1-Olefin mit 4 bis 10 C-Atomen zudosiert werden.

Der Druck in der zweiten Stufe beträgt 5 bis 49 bar, vorzugsweise 10 bis 49 bar.

Die Verweilzeiten in den einzelnen Reaktionsstufen werden so eingestellt, daß sie in der ersten Stufe 15 bis 400 Minuten, vorzugsweise 20 bis 180 Minuten, und in der zweiten Stufe 10 bis 180 Minuten, vorzugsweise 15 bis 90 Minuten betragen.

Es ist auch möglich, in der zweiten Stufe zusätzlich Aktivator nachzudosieren. Dies ist vor allem dann vorteilhaft, wenn die Polymerisation in der ersten Stufe bei einem niedrigen Molverhältnis von Aktivator zu Metallocen beziehungsweise bei niedriger Aktivatorkonzentration durchgeführt wird.

Falls erforderlich, wird in die zweite Stufe noch zusätzlicher Wasserstoff zur geeigneten Regelung der Molmasse der dort hergestellten Polymeren eingespeist.

Führt man die erste Stufe nicht in einem vollständig flüssigkeitserfüllten Reaktor durch, so hat man auch die Möglichkeit, vor Beginn der zweiten Stufe den Wasserstoffgehalt der Suspension durch Entfernen von Gasgemisch aus der Gasphase herabzusetzen.

Die Temperatur in der zweiten Polymerisationsstufe beträgt 0 bis 100 °C, vorzugsweise 40 bis 85 °C.

Nach Durchführung der zweiten Stufe wird das entstandene Polymer aufgearbeitet. Dies kann dadurch geschehen, daß man das resultierende Gemisch aus Polymer und Monomer in einer oder mehreren Stufen auf Atmosphärendruck entspannt und das restliche Monomer in den Kreislauf zurückführt.

Die Aufarbeitung kann aber auch durch Filtration, Dekantation oder Zentrifugieren in dazu geeigneten, druckfesten Aggregaten geschehen, z.B. in Druckfiltern, Sedimentationsstürmen, Zentrifugen oder Dekantern.

Das nach dem erfindungsgemäßen Verfahren hergestellte Blockcopolymer weist neben einer ausreichenden Härte und hohen Fließfähigkeit eine gute Schlagzähigkeit über einen breiten Temperaturbereich auf, vor allem aber bei tiefen Temperaturen von -40 °C und -60 °C.

Diese Polymeren übertreffen die bisher mit Katalysatorsystemen nach dem Stand der Technik hergestellten Polymeren in ihrer Tieftemperaturschlagzähigkeit bei weitem, wie aus dem Vergleich mit den mit Metallocenkatalysatoren hergestellten Homopolymeren ersehen werden kann.

Gegenüber den mit Katalysatoren auf $MgCl_2$-Basis hergestellten Blockcopolymeren zeichnen sich die erfindungsgemäß hergestellten Produkte durch hohe Katalysatorausbeute, eine bei sehr tiefer Temperatur und in einem sehr engen Temperaturbereich erfolgende Erstarrung der amorphen Phase und damit sehr gute Tieftemperaturschlagzähigkeit aus.

Von großem Vorteil ist die durch Wahl des Katalysators durchführbare Steuerung der Fließfähigkeit über einen sehr großen Bereich, der zusätzlich noch durch Zugabe eines Molmassenregulators (in der Regel Wasserstoff) erweitert werden kann.

Mit Katalysatoren auf $MgCl_2$-Basis kann man sehr leicht fließende Produkte aufgrund der spezifischen Eigenschaften des Katalysators entweder überhaupt nicht oder nur durch Zusatz großer Mengen an Molmassenregulatoren erreichen.

Dieser Zusatz ist begrenzt durch die Löslichkeit dieses Regulators (in der Regel Wasserstoff) im Polymerisationsmedium (Propylen) und führt auch zu verfahrens- und reaktionstechnischen Komplikationen, insbesondere in einem kontinuierlich ablaufenden Verfahren mit Rückführung von nicht umgesetztem Reaktionsmedium in den Prozeß.

Für die Weiterverarbeitung wird das erfindungsgemäß gewonnene Blockcopolymer mit den üblichen Zusätzen (Stabilisatoren, Gleitmittel, Füllstoffe, Pigmente etc.) versehen. Es kann ohne weitere Vorbehandlung in Extrudern oder Knetern direkt zur Herstellung von Kunststofformkörpern verwendet werden.

Es kann aber auch in Extrudern oder Kneten in Granulatform überführt werden. Dieser zusätzliche Verarbeitungsschritt kann zu einer Verbesserung der mechanischen Eigenschaften der hergestellten Formkörper führen.

Die Bestimmung der Eigenschaften der gemäß den nachfolgenden Beispielen hergestellten Polymeren wurde im einzelnen nach folgenden Methoden durchgeführt:

Der Schmelzindex (MFI) wurde nach DIN 53 735 gemessen und in g/10 min angegeben.

Die Viskositätszahl VZ der Polymeren wurde an 0,1 Gew.-%igen Lösungen in Dekahydronaphthalin (Isomerengemisch) bei 135 °C in einem Kapillarviskosimeter bestimmt und in $cm^3/g$ angegeben.

Die Messung der Kugeldruckhärten (KDH) erfolgte in Anlehnung an DIN 53 456 an gepreßten Platten, die 3 h bei 100 oder 120 °C unter $N_2$ getempert, im Laufe von 3 h abgekühlt und zum Temperaturausgleich 24 h bei 23 °C und 50 % rel. Luftfeuchte in einer Klimakammer gelagert worden waren.

Zur Bestimmung der mechanischen Eigenschaften bei tiefen Temperaturen wurde der Schlagbiegeversuch bei -40 °C und -60 °C am Normkleinstab mit V-Einkerbung (Flankenwinkel 45°, Kerbtiefe 1,3 mm, Kerbradius 1 mm) herangezogen. Die Probekörper wurden gepreßten Platten entnommen, die nach Herstellung 24 h bei 23 °C und 50 % rel. Luftfeuchte gelagert worden waren.

Die Bestimmung des Ethylengehaltes erfolgte IR-spektrometrisch an 0,1 mm dicken, bei 180 °C gepreßten Folien, wobei die Absorptionsbanden bei den Wellenlängen 13,65 und 13,9 µm zur Auswertung herangezogen wurden.

Die Bestimmung des Anteils an nichtkristallinem Ethylen-Propylen-Copolymer erfolgte durch Umkristallisation der Blockcopolymeren aus einem Benzingemisch (Siedebereich 140 bis 170 °C) und Ausfällen der darin bei 25 °C löslichen Anteile mit Aceton.

**Beispiel 1**

Ein trockener Kessel mit 70 $dm^3$ Inhalt wurde mit Stickstoff gespült und mit 40 $dm^3$ flüssigem Propylen befüllt. Dann wurden 136 $cm^3$ toluolische Methylaluminoxanlösung (= MAO, entsprechend 200 mmol Al, mittlerer Oligomerisierungsgrad n = 20) zugegeben und der Ansatz bei 30 °C 15 min gerührt. Parallel dazu wurden 103,6 mg (0,205 mmol) rac-Ethylenbisindenylhafniumdichlorid in 17 $cm^3$ MAO-Lösung (=25 mmol Al) gelöst und durch 15 minütiges Stehenlassen voraktiviert.

Die Lösung wurde dann in den Kessel gegeben. Das Polymerisationssystem wurde auf eine Temperatur von 70 °C aufgeheizt und dann 180 min bei dieser Temperatur gehalten. Ethylen wurde in die Suspension eingeleitet, bis der Siededruck des Monomergemisches auf 40 bar gestiegen war. Dieser Druck wurde während der restlichen 22 min Reaktionszeit durch Nachdrücken von Ethylen aufrechterhalten.

Man erhielt 4,1 kg Blockcopolymer.

Das Polymer besaß eine VZ von 90. 9,0 Gew.-% des Polymeren waren durch Polymerisation von Ethylen entstanden. Durch Umkristallisation aus dem Benzingemisch wurden 63 % kristallisierbare Anteile, bezogen auf das gesamte Polymer, mit einem Ethylengehalt von 1,4 Gew.-% und einer VZ von 93 erhalten. Aus der Mutterlauge erhielt man durch Fällen mit Aceton 37 %, bezogen auf das Blockcopolymer, einer kautschukartigen Masse mit 30 Gew.-% Ethylengehalt und einer VZ von 85. Seine KDH war 20 $N/mm^2$.

In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -59

bis -51 °C und von -17 bis -6 °C zu beobachten. Das Schmelzen des Polymeren erfolgte ebenfalls in zwei Abschnitten bei 127 und 137 °C. Das Polymere besaß einen MFI 230/2,16 von 320 g/10 min und bei -40 °C eine Kerbschlagzähigkeit von 1,9 $mJ/mm^2$.

**Beispiel 2**

Ein trockener Kessel mit 70 $dm^3$ Inhalt wurde mit Stickstoff gespült und mit 40 $dm^3$ flüssigem Propylen befüllt. Dann wurden 136 $cm^3$ toluolische Methylaluminoxanlösung (= MAO, entsprechend 200 mmol Al, mittlerer Oligomerisierungsgrad n = 20) zugegeben und der Ansatz bei 30 °C 15 min gerührt. Parallel dazu wurden 80,6 mg (0,159 mmol) rac-Ethylenbisindenylhafniumdichlorid in 17 $cm^3$ MAO-Lösung (= 25 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 90 min bei dieser Temperatur gehalten. Es wurde Ethylen in die Suspension eingeleitet, bis der Siededruck des Monomergemisches auf 35 bar gestiegen war.

Dieser Druck wurde während der restlichen 30 min Reaktionszeit durch Nachspeisen von Ethylen aufrechterhalten.
Man erhielt 0,55 kg Blockcopolymer.
Das Polymer besaß eine VZ von 112. 10,8 Gew.-% des Polymeren waren durch Polymerisation von Ethylen entstanden. Durch Umkristallisation aus dem Benzingemisch wurden 62 % kristallisierbare Anteile, bezogen auf das gesamte Polymer, mit einem Ethylengehalt von 1,5 Gew.-% und einer VZ von 132 erhalten. Aus der Mutterlauge erhielt man durch Fällen mit Aceton 38 %, bezogen auf das Blockcopolymer, einer kautschukartigen Masse mit 26 Gew.-% Ethylengehalt und einer VZ von 80.

In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -60 bis -51 °C und von -30 bis -10 °C zu beobachten. Das Schmelzen des Polymeren erfolgte ebenfalls in zwei Abschnitten bei 135 und 138 °C. Das Polymere besaß einen MFI 230/2,16 von 69 g/10 min, bei -40 °C eine Kerbschlagzähigkeit von 2,1 $mJ/mm^2$ und bei -60 °C eine Kerbschlagzähigkeit von 1,8 $mJ/mm^2$.
Seine KDH betrug 13 $N/mm^2$.

**Beispiel 3**

Ein trockener Kessel mit 70 $dm^3$ Inhalt wurde mit Stickstoff gespült und mit 40 $dm^3$ flüssigem Propylen befüllt. Dann wurden 136 $cm^3$ toluolische Methylaluminoxanlösung (= MAO, entsprechend 200 mmol Al, mittlerer Oligomerisierungsgrad n = 20) zugegeben und der Ansatz bei 30 °C 15 min gerührt. Parallel dazu wurden 91,0 mg (0,180 mmol) rac-Ethylenbisindenylhafniumdichlorid in 17 $cm^3$ MAO-Lösung (= 25 mmol Al) gelöst und durch 15 minütiges Stehenlassen voraktiviert.

Die Lösung wurde dann in den Kessel gegeben. Das Polymerisationssystem wurde auf eine Temperatur von 70 °C aufgeheizt und dann 180 min bei dieser Temperatur gehalten. Es wurde Ethylen in die Suspension eingeleitet, bis der Siededruck des Monomergemisches auf 40 bar gestiegen war. Dieser Druck wurde während der restlichen 15 min Reaktionszeit durch Nachspeisen von Ethylen aufrechterhalten.
Man erhielt 3,4 kg Blockcopolymer.
Das Polymer besaß eine VZ von 110. 11,5 Gew.-% des Polymeren waren durch Polymerisation von Ethylen entstanden. Durch Umkristallisation aus dem Benzingemisch wurden 74 % kristallisierbare Anteile, bezogen auf das gesamte Polymer, mit einem Ethylengehalt von 1,9 Gew.-% und einer VZ von 98 erhalten. Aus der Mutterlauge erhielt man durch Fällen mit Aceton 26 %, bezogen auf das Blockcopolymer, einer kautschukartigen Masse mit 39 Gew.-% Ethylengehalt und einer VZ von 144.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -67 bis -47 °C und von -18 bis -7 °C zu beobachten. Das Schmelzen des Polymeren erfolgte ebenfalls in zwei Abschnitten bei 133 und 138 °C. Das Polymere besaß einen MFI 230/2,16 von 315 g/10 min, bei -40 °C eine Kerbschlagzähigkeit von 1,9 $mJ/mm^2$ und bei -60 °C eine Kerbschlagzähigkeit von 1,1 $mJ/mm^2$.

Das Polymer wurde unter Zugabe üblicher Wärmestabilisatoren in die Granulatform überführt.
Die aus dem Granulat hergestellten Prüfkörper besaßen bei -40 °C eine Kerbschlagzähigkeit von 2,1 $mJ/mm^2$ und bei -60 °C eine Kerbschlagzähigkeit von 1,5 $mJ/mm^2$.

**Biespiel 4**

Ein trockener Kessel mit 70 $dm^3$ Inhalt wurde mit Stickstoff gespült und mit 40 $dm^3$ flüssigem Propylen befüllt. Dann wurden 102 $cm^3$ toluolische Methylaluminoxanlösung (= MAO, entsprechend 150 mmol Al, mittlerer Oligomerisierungsgrad n = 20) zugegeben und der Ansatz bei 30 °C 15 min gerührt. Parallel dazu wurden 90 mg (0,178 mmol) rac-Ethylenbisindenylhafniumdichlorid in 17 $cm^3$ MAO-Lösung (= 25 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 180 min bei dieser Temperatur gehalten. Es wurde Ethylen in die Suspension eingeleitet, bis der Siededruck des Monomergemisches auf 40 bar gestiegen war. Dieser Druck wurde während der restlichen 15 min Reaktionszeit durch Nachspeisen von Ethylen aufrechterhalten.
Man erhielt 0,76 kg Blockcopolymer.
Das Polymer besaß eine VZ von 97. 14,8 Gew.-% des Polymeren waren durch Polymerisation von Ethylen entstanden. Durch Umkristallisation aus dem Benzingemisch wurden 60 % kristallisierbare Anteile, bezogen auf das gesamte Polymer, mit einem Ethylengehalt von 1,9 Gew.-% und einer VZ von 109 erhalten. Aus der Mutterlauge erhielt man durch Fällen mit Aceton 40 %, bezogen auf das Blockcopolymer, einer kautschukartigen Masse mit 34 Gew.-% Ethylengehalt und einer VZ von 79.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -62 bis -53 °C und von -24 bis -8 °C zu beobachten. Das Schmelzen des Polymeren erfolgte ebenfalls in zwei Abschnitten bei 135 und 139 °C. Das Polymere besaß einen MFI 230/2,16 von 85 g/10 min, bei -40 °C eine Kerbschlagzähigkeit von 1,4 $mJ/mm^2$ und bei -60 eine Kerbschlagzähigkeit von 1,3 $mJ/mm^2$.

**Beispiel 5**

Ein trockener Kessel mit 70 $dm^3$ Inhalt wurde mit Stickstoff gespült und mit 40 $dm^3$ flüssigem Propylen befüllt. Dann wurden 255 $cm^3$ toluolische Methylaluminoxanlösung (= MAO, entsprechend 375 mmol Al, mittlerer Oligomerisierungsgrad n = 20) zugegeben und der Ansatz bei 30 °C 15 min gerührt. Parallel dazu wurden 49,8 mg (0,098 mmol) rac-Ethylenbisindenylhafniumdichlorid in 17 $cm^3$ MAO-Lösung (= 25 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 50 min bei dieser Temperatur gehalten und innerhalb von 10 min auf 60 °C abgekühlt. Es wurde Ethylen in die Suspension eingeleitet, bis der Siededruck des Monomergemisches auf 30 bar gestiegen war. Dieser Druck wurde während der restlichen 10 min Reaktionszeit durch Nachspeisen von Ethylen aufrechterhalten.
Man erhielt 1,5 kg Blockcopolymer.
Das Polymer besaß eine VZ von 111. 4,3 Gew.-% des Polymeren waren durch Polymerisation von Ethylen entstanden. Durch Umkristallisation aus dem Benzingemisch wurden 78 % kristallisierbare Anteile, bezogen auf das gesamte Polymer, mit einem Ethylengehalt von 0,2 Gew.-% und einer VZ von 107 erhalten. Aus der Mutterlauge erhielt man durch Fällen mit Aceton 22 %, bezogen auf das Blockcopolymer, einer kautschukartigen Masse mit 18,8 Gew.-% Ethylengehalt und einer VZ von 125.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -63 bis -49 °C und von -22 bis -8 °C zu beobachten. Das Schmelzen des Polymeren erfolgte ebenfalls in zwei Abschnitten bei 133 und 137 °C. Das Polymere besaß einen MFI 230/2,16 von 79 g/10 min, bei -40 °C eine Kerbschlagzähigkeit von 1,4 $mJ/mm^2$ und bei -60 eine Kerbschlagzähigkeit von 1,3 $mJ/mm^2$.

**Beispiel 6**

Ein trockener Kessel mit 70 $dm^3$ Inhalt wurde mit Stickstoff gespült und mit 40 $dm^3$ flüssigem Propylen befüllt. Dann wurden 255 $cm^3$ toluolische Methylaluminoxanlösung (= MAO, entsprechend 375 mmol Al, mittlerer Oligomerisierungsgrad n = 20) zugegeben und der Ansatz bei 30 °C 15 min gerührt. Parallel dazu wurden 44,9 mg (0,089 mmol) rac-Ethylenbisindenylhafniumdichlorid in 17 $cm^3$ MAO-Lösung (= 25 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 50 min bei dieser Temperatur gehalten und innerhalb von 10 min auf 60 °C abgekühlt. Es wurde Ethylen in die Suspension eingeleitet, bis der Siededruck des Monomergemisches auf 30 bar gestiegen war. Dieser Druck wurde während der restlichen 20 min Reaktionszeit durch Nachspeisen

von Ethylen aufrechterhalten.
Man erhielt 1,5 kg Blockcopolymer.
Das Polymer besaß eine VZ von 154. 7,0 Gew.-% des Polymeren waren durch Polymerisation von Ethylen entstanden. Durch Umkristallisation aus dem Benzingemisch wurden 76 % kristallisierbare Anteile, bezogen auf das gesamte Polymer, mit einer VZ von 146 erhalten. Aus der Mutterlauge erhielt man durch Fällen mit Aceton 24 %, bezogen auf das Blockcopolymer, einer kautschukartigen Masse mit 29 Gew.-% Ethylengehalt und einer VZ von 180.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -61 bis -51 °C und von -20 bis -12 °C zu beobachten. Das Schmelzen des Polymeren erfolgte ebenfalls in zwei Abschnitten bei 133 und 137 °C. Das Polymere besaß einen MFI 230/5 von 74 g/10 min, bei -40 °C eine Kerbschlagzähigkeit von 2,3 $mJ/mm^2$ und bei -60 eine Kerbschlagzähigkeit von 1,9 $mJ/mm^2$. Seine KDH betrug 26 N $mm^{-2}$.

**Beispiel 7**

Ein trockener Kessel mit 70 $dm^3$ Inhalt wurde mit Stickstoff gespült und mit 40 $dm^3$ flüssigem Propylen befüllt. Dann wurden 255 $cm^3$ toluolische Methylaluminoxanlösung (= MAO, entsprechend 375 mmol Al, mittlerer Oligomerisierungsgrad n = 20) zugegeben und der Ansatz bei 30 °C 15 min gerührt. Parallel dazu wurden 44,8 mg (0,089 mmol) rac-Ethylenbisindenylhafniumdichlorid in 17 $cm^3$ MAO-Lösung (= 25 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 50 min bei dieser Temperatur gehalten und innerhalb von 10 min auf 60 °C abgekühlt. Es wurde Ethylen in die Suspension eingeleitet, bis der Siededruck des Monomergemisches auf 35 bar gestiegen war. Dieser Druck wurde während der restlichen 10 min Reaktionszeit durch Nachspeisen von Ethylen aufrechterhalten.
Man erhielt 1,5 kg Blockcopolymer.
Das Polymer besaß eine VZ von 118. 9,2 Gew.-% des Polymeren waren durch Polymerisation von Ethylen entstanden. Durch Umkristallisation aus dem Benzingemisch wurden 72 % kristallisierbare Anteile, bezogen auf das gesamte Polymer, mit einem Ethylengehalt von 0,2 Gew.-% und einer VZ von 120 erhalten. Aus der Mutterlauge erhielt man durch Fällen mit Aceton 28 %, bezogen auf das Blockcopolymer, einer kautschukartigen Masse mit 32 Gew.-% Ethylengehalt und einer VZ von 113.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -60 bis -52 °C und von -18 bis -10 °C zu beobachten. Das Schmelzen des Polymeren erfolgte ebenfalls in zwei Abschnitten bei 133 und 137 °C. Das Polymere besaß eine KDH von 65 N $mm^{-2}$.

**Beispiel 8**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 85,6 mg (0,160 mmol) rac-Dimethylsilylbisindenylhafniumdichlorid in 90 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 50 min bei dieser Temperatur gehalten und innerhalb von 10 min auf 60 °C abgekühlt. Es wurde Ethylen in die Suspension eingeleitet, bis der Siededruck des Monomergemisches auf 34 bar gestiegen war. Dieser Druck wurde während der restlichen 10 min Reaktionszeit durch Nachspeisen von Ethylen aufrechterhalten.
Man erhielt 1,40 kg Blockcopolymer.
Das Polymer besaß eine VZ von 190. 2,9 Gew.-% des Polymeren waren durch Polymerisation von Ethylen entstanden. Durch Umkristallisation aus dem Benzingemisch wurden 86 % kristallisierbare Anteile, bezogen auf das gesamte Polymer, mit einer VZ von 187 erhalten. Aus der Mutterlauge erhielt man durch Fällen mit Aceton 14 %, bezogen auf das Blockcopolymer, einer kautschukartigen Masse mit 21 Gew.-% Ethylengehalt und einer VZ von 208.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -62 bis -51 °C und von -23 bis -12 °C zu beobachten. Das Schmelzen des Polymeren erfolgte ebenfalls in zwei

Abschnitten bei 133 und 157 °C. Das Polymere besaß einen MFI 230/2,16 von 9,0 g/10 min, bei -40 °C eine Kerbschlagzähigkeit von 3,8 $mJ/mm^2$ und bei -60 eine Kerbschlagzähigkeit von 2,5 $mJ/mm^2$.

**Beispiel 9**

Ein trockener Kessel mit 70 $dm^3$ Inhalt wurde mit Stickstoff gespült und mit 40 $dm^3$ flüssigem Propylen befüllt. Dann wurden 174 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 85,6 mg (0,160 mmol) rac-Dimethylsilylbisindenylhafniumdichlorid in 90 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 50 min bei dieser Temperatur gehalten und innerhalb von 10 min auf 60 °C abgekühlt. Es wurde Ethylen in die Suspension eingeleitet, bis der Siededruck des Monomergemisches auf 39 bar gestiegen war. Dieser Druck wurde während der restlichen 20 min Reaktionszeit durch Nachspeisen von Ethylen aufrechterhalten.
Man erhielt 1,8 kg Blockcopolymer.
Das Polymer besaß eine VZ von 197. 7,0 Gew.-% des Polymeren waren durch Polymerisation von Ethylen entstanden. Durch Umkristallisation aus dem Benzingemisch wurden 76 % kristallisierbare Anteile, bezogen auf das gesamte Polymer, mit einem Ethylengehalt von 0,2 Gew.-% und einer VZ von 210 erhalten. Aus der Mutterlauge erhielt man durch Fällen mit Aceton 24 %, bezogen auf das Blockcopolymer, einer kautschukartigen Masse mit 29 Gew.-% Ethylengehalt und einer VZ von 156.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -57 bis -47 °C und von -32 bis -20 °C zu beobachten. Das Schmelzen des Polymeren erfolgte ebenfalls in zwei Abschnitten bei 140 und 154 °C. Das Polymere besaß einen MFI 230/2,16 von 8,7 g/10 min, bei -40 °C eine Kerbschlagzähigkeit von 2,3 $mJ/mm^2$ und bei -60 eine Kerbschlagzähigkeit von 1,8 $mJ/mm^2$. Seine KDH betrug 47 N $mm^{-2}$.

**Beispiel 10**

Ein trockener Kessel mit 70 $dm^3$ Inhalt wurde mit Stickstoff gespült und mit 40 $dm^3$ flüssigem Propylen befüllt. Dann wurden 161 $cm^3$ toluolische Methylaluminoxanlösung (= MAO, entsprechend 256 mmol Al, mittlerer Oligomerisierungsgrad n = 20) zugegeben und der Ansatz bei 30 °C 15 min gerührt. Parallel dazu wurden 5,1 mg (0,011 mmol) rac-Dimethylsilylbisindenylzirkoniumdichlorid in 86 $cm^3$ MAO-Lösung (= 132 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 80 min bei dieser Temperatur gehalten. Nach Abkühlen auf 60 °C (10 min Zeitbedarf) wurde Ethylen in die Suspension eingeleitet, bis der Siededruck des Monomergemisches auf 35 bar gestiegen war. Dieser Druck wurde während der restlichen 10 min Reaktionszeit durch Nachspeisen von Ethylen aufrechterhalten.
Man erhielt 4,6 kg Blockcopolymer.
Das Polymer besaß eine VZ von 56. 4,8 Gew.-% des Polymeren waren durch Polymerisation von Ethylen entstanden. Durch Umkristallisation aus dem Benzingemisch wurden 79 % kristallisierbare Anteile, bezogen auf das gesamte Polymer, mit einem Ethylengehalt von 0,4 Gew.-% und einer VZ von 48 erhalten. Aus der Mutterlauge erhielt man durch Fällen mit Aceton 21 %, bezogen auf das Blockcopolymer, einer kautschukartigen Masse mit 21 Gew.-% Ethylengehalt und einer VZ von 86.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -59 bis -48 °C und von -37 bis -25 °C zu beobachten. Das Schmelzen des Polymeren erfolgte ebenfalls in zwei Abschnitten bei 138 und 160 °C. Das Polymere besaß bei -40 °C eine Kerbschlagzähigkeit von 45 $mJ/mm^2$ und bei -60 eine Kerbschlagzähigkeit von 22 $mJ/mm^2$. Der MFI 230/5 betrug 20,4 g/10 min.

**Beispiel 11**

Ein trockener Kessel mit 16 $dm^3$ Inhalt wurde mit Stickstoff gespült und mit 10 $dm^3$ flüssigem Propylen befüllt. Dann wurden 44 $cm^3$ toluolische Methylaluminoxanlösung (= MAO, entsprechend 64 mmol Al, mittlerer Oligomerisierungsgrad n = 20) zugegeben und der Ansatz bei 30 °C 15 min gerührt. Parallel dazu wurden 149,4 mg (0,250 mmol) rac-Phenyl(methyl)silylbisindenylhafniumdichlorid in 23 $cm^3$ MAO-

Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 80 min bei dieser Temperatur gehalten und innerhalb von 10 min auf 60 °C abgekühlt. Es wurde Ethylen in die Suspension eingeleitet, bis der Siededruck des Monomergemisches auf 30 bar gestiegen war. Dieser Druck wurde während der restlichen 25 min Reaktionszeit durch Nachspeisen von Ethylen aufrechterhalten.
Man erhielt 0,2 kg Blockcopolymer.
Das Polymer besaß eine VZ von 130. 3,1 Gew.-% des Polymeren waren durch Polymerisation von Ethylen entstanden. Durch Umkristallisation aus dem Benzingemisch wurden 88 % kristallisierbare Anteile, bezogen auf das gesamte Polymer, mit einer VZ von 125 erhalten. Aus der Mutterlauge erhielt man durch Fällen mit Aceton 12 %, bezogen auf das Blockcopolymer, einer kautschukartigen Masse mit 26 Gew.-% Ethylengehalt und einer VZ von 167.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -60 bis -49 °C und von -29 bis -18 °C zu beobachten. Das Schmelzen des Polymeren erfolgte ebenfalls in zwei Abschnitten bei 130 und 154 °C. Das Polymere besaß einen MFI 230/2,16 von 36 g/10 min, einen MFI 230/5 von 122 g/10 min, bei -40 °C eine Kerbschlagzähigkeit von 2,5 $mJ/mm^2$ und bei -60 ° eine Kerbschlagzähigkeit von 2,0 $mJ/mm^2$.

**Beispiel 12**

Ein trockener Kessel mit 16 $dm^3$ Inhalt wurde mit Stickstoff gespült und mit 10 $dm^3$ flüssigem Propylen befüllt. Dann wurden 44 $cm^3$ toluolische Methylaluminoxanlösung (= MAO, entsprechend 64 mmol Al, mittlerer Oligomerisierungsgrad n = 20) zugegeben und der Ansatz bei 30 °C 15 min gerührt. Parallel dazu wurden 150,1 mg (0,251 mmol) rac-Phenyl(methyl)silylbisindenylhafniumdichlorid in 23 $cm^3$ MAO-Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 180 min bei dieser Temperatur gehalten. Es wurde Ethylen in die Suspension eingeleitet, bis der Siededruck des Monomergemisches auf 36 bar gestiegen war. Dieser Druck wurde während der restlichen 30 min Reaktionszeit durch Nachspeisen von Ethylen aufrechterhalten.
Man erhielt 1,3 kg Blockcopolymer.
Das Polymer besaß eine VZ von 166. 4,5 Gew.-% des Polymeren waren durch Polymerisation von Ethylen entstanden. Durch Umkristallisation aus dem Benzingemisch wurden 84 % kristallisierbare Anteile, bezogen auf das gesamte Polymer, mit einem Ethylengehalt von 0,8 Gew.-% und einer VZ von 176 erhalten. Aus der Mutterlauge erhielt man durch Fällen mit Aceton 16 %, bezogen auf das Blockcopolymer, einer kautschukartigen Masse mit 24 Gew.-% Ethylengehalt und einer VZ von 113.
In der aus der Differentialthermoanalyse erhaltenen Enthalpiekurve (-180 bis 200 °C, Heizrate 2 K/min) waren unterhalb des Temperaturnullpunktes zwei Glasumwandlungen in den Temperaturbereichen von -56 bis -45 °C und von -31 bis -22 °C zu beobachten. Das Schmelzen des Polymeren erfolgte ebenfalls in zwei Abschnitten bei 140 und 151 °C. Das Polymere besaß einen MFI 230/2,16 von 17 g/10 min, einen MFI 230/5 von 54 g/10 min, bei -40 °C eine Kerbschlagzähigkeit von 2,1 $mJ/mm^2$ und bei -60 ° eine Kerbschlagzähigkeit von 1,9 $mJ/mm^2$.

**Vergleichsbeispiel A**

Ein trockener Kessel mit 16 $dm^3$ Inhalt wurde mit Stickstoff gespült und mit 10 $dm^3$ flüssigem Propylen befüllt. Dann wurden 43 $cm^3$ toluolische Methylaluminoxanlösung (= MAO, entsprechend 68 mmol Al, mittlerer Oligomerisierungsgrad n = 20) zugegeben und der Ansatz bei 30 °C 15 min gerührt. Parallel dazu wurden 17,7 mg (0,034 mmol) rac-Ethylenbisindenylhafniumchlorid in 21,4 $cm^3$ MAO-Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Man erhielt 1,03 kg Polymer mit einer VZ von 124. Durch Umkristallisation aus dem Benzingemisch wurden 97,7 Gew.-% kristallisierbare Anteile, bezogen auf das gesamte Polymer, erhalten.
Aus der Mutterlauge erhielt man durch Fällen mit Aceton 2,3 Gew.-%, bezogen auf das Polymer, einer klebrigen Masse, mit einer VZ von 36.
In der aus der Differentialthermoanalyse erhaltenen Enthalpiekurve (-180 bis 200 °C, Heizrate 2 K/min) war unterhalb des Temperaturnullpunktes keine Glasumwandlung zu beobachten. Das Schmelzen des Polymeren erfolgte bei 138 °C. Das Polymere besaß bei -40 °C eine Kerbschlagzähigkeit von 1,4 $mJ/mm^2$ und bei -60 ° eine Kerbschlagzähigkeit von 1,3 $mJ/mm^2$.

**Vergleichsbeispiel B**

Ein trockener Kessel mit 16 $dm^3$ Inhalt wurde mit Stickstoff gespült und mit 10 $dm^3$ flüssigem Propylen befüllt. Dann wurden 43 $cm^3$ toluolische Methylaluminoxanlösung (= MAO, entsprechend 64 mmol Al, mittlerer Oligomerisierungsgrad n = 20) zugegeben und der Ansatz bei 30 °C 15 min gerührt. Parallel dazu wurden 42,6 mg (0,079 mmol) rac-Dimethylsilylbisindenylhafniumdichlorid in 21,4 $cm^3$ MAO-Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt, 60 min bei dieser Temperatur gehalten. Man erhielt 2,15 kg Polymer mit einer VZ von 173. Durch Umkristallisation aus dem Benzingemisch wurden 99,7 Gew.-% kristallisierbare Anteile, bezogen auf das gesamte Polymer, erhalten.
Aus der Mutterlauge erhielt man durch Fällen mit Aceton 0,3 Gew.-%, bezogen auf das Polymer.
In der aus der Differentialthermoanalyse erhaltenen Enthalpiekurve (-180 bis 200 °C, Heizrate 2 K/min) war unterhalb des Temperaturnullpunktes keine Glasumwandlung zu beobachten. Das Schmelzen des Polymeren erfolgte bei 158 °C. Das Polymere besaß einen MFI 230/2,16 von 17 g/10 min, bei -40 °C eine Kerbschlagzähigkeit von 1,6 $mJ/mm^2$ und bei -60 eine Kerbschlagzähigkeit von 1,3 $mJ/mm^2$.

**Vergleichsbeispiel C**

Ein trockener Kessel mit 16 $dm^3$ Inhalt wurde mit Stickstoff gespült und mit 10 $dm^3$ flüssigem Propylen befüllt. Dann wurden 43 $cm^3$ toluolische Methylaluminoxanlösung (= MAO, entsprechend 64 mmol Al, mittlerer Oligomerisierungsgrad n = 20) zugegeben und der Ansatz bei 30 °C 15 min gerührt. Parallel dazu wurden 122,2 mg (0,204 mmol Al) rac-Phenyl(methyl)silylbisindenylhafniumdichlorid in 21,4 $cm^3$ MAO-Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Man erhielt 0,75 kg Polymer mit einer VZ von 141. Durch Umkristallisation aus dem Benzingemisch wurden 96,5 Gew.-% kristallisierbare Anteile, bezogen auf das gesamte Polymer, erhalten.
Aus der Mutterlauge erhielt man durch Fällen mit Aceton 3,5 Gew.-%, bezogen auf das Polymer einer klebrigen Masse, mit einer VZ von 106.
In der aus der Differentialthermoanalyse erhaltenen Enthalpiekurve (-180 bis 200 °C, Heizrate 2 K/min) war unterhalb des Temperaturnullpunktes keine Glasumwandlung zu beobachten. Das Schmelzen des Polymeren erfolgte bei 154 °C. Das Polymere besaß einen MFI 230/2,16 von 24 g/10 min, bei -40 °C eine Kerbschlagzähigkeit von 1,5 $mJ/mm^2$ und bei -60° eine Kerbschlagzähigkeit von 1,0 $mJ/mm^2$.

**Vergleichsbeispiel D**

Ein trockener Kessel mit 16 $dm^3$ Inhalt wurde mit Stickstoff gespült und mit 10 $dm^3$ flüssigem Propylen befüllt. Dann wurden 43 $cm^3$ toluolische Methylaluminoxanlösung (= MAO, entsprechend 64 mmol Al, mittlerer Oligomerisierungsgrad n = 20) zugegeben und der Ansatz bei 30 °C 15 min gerührt. Parallel dazu wurden 5,2 mg (0,012 mmol) rac-Dimethylsilylbisindenylzirkoniumdichlorid in 21,4 $cm^3$ MAO-Lösung (= 34 mmol Al) gelöst und durch 15 minütiges Stehenlassen voraktiviert.
Die Lösung wurde dann in den Kessel gegeben. Das Polymerisationssystem wurde auf eine Temperatur von 70 °C aufgeheizt und dann 60 min bei dieser Temperatur gehalten. Man erhielt 2,10 kg Polymer mit einer VZ von 47.
Durch Umkristallisation aus dem Benzingemisch wurden 98,5 % kristallisierbare Anteile, bezogen auf das gesamte Polymer, erhalten.

Aus der Mutterlauge erhielt man durch Fällen mit Aceton 1,5 %, bezogen auf das Polymer, einer klebrigen Masse, mit einer VZ von 26.
In der aus der Differentialthermoanalyse erhaltenen Enthalpiekurve (-180 bis 200 °C, Heizrate 2 K/min) war unterhalb des Temperaturnullpunktes keine Glasumwandlung zu beobachten. Das Schmelzen des Polymeren erfolgte bei 160 °C. Das Polymere besaß bei -40 °C eine Kerbschlagzähigkeit von 1,1 $mJ/mm^2$ und bei -60 eine Kerbschlagzähigkeit von 0,8 $mJ/mm^2$.

**Vergleichsbeispiel E**

Herstellung einer festen Titan-Katalysatorkomponente

9,52 g (100 mmol) wasserfreies Magnesiumchlorid, 50 $cm^3$ Decan und 46,8 $cm^3$ (300 mmol) 2-Ethylhexylalkohol wurden bei 130 °C 2 h zur Reaktion gebracht, so daß sich eine einheitliche Lösung bildete. Hierzu gab man 2,22 g (15,0 mmol) Phthalsäureanhydrid. Die Mischung wurde 1 h bei 130 °C weiter gerührt, bis sich das Phthalsäureanhydrid gelöst hatte. Die erhaltene Lösung wurde auf Raumtemperatur abgekühlt und im Verlauf 1 h mit 400 $cm^3$ (3,6 mol) bei -20 °C gehaltenem Titantetrachlorid tropfenweise versetzt, worauf die Mischung 4 h auf 110 °C erhitzt wurde: Als die Temperatur von 110 °C erreicht war, wurden 5,36 $cm^3$ (25,0 mmol) Diisobutyl-phthalat zugegeben. Die Mischung wurde weitere 2 h bei dieser Temperatur unter Rühren gehalten. Danach wurde der Ansatz heiß filtriert, um den festen Anteil zu erhalten, der erneut in 400 $cm^3$ Titantetrachlorid suspendiert und 2 h bei 110 °C umgesetzt wurde. Danach wurde der feste Anteil durch Heißfiltrieren gesammelt und mit 110 °C heißem Decan und Hexan gewaschen, bis in den Waschlösemitteln keine freie Titanverbindung mehr nachgewiesen werden konnte.
Die so erhaltene feste Titan-Katalysatorkomponente wurde in Form einer Suspension in Hexan aufbewahrt. Ein Teil der Suspension wurde getrocknet, um die Zusammensetzung des Katalysators zu untersuchen. Die Analyse ergab 2,5 Gew.-% Titan, 56,4 Gew.-% Chlor, 17,5 Gew.-% Magnesium und 21,0 Gew.-% Diisobutylphthalat.

**Polymerisation**

In einem Kessel mit 70 $dm^3$ Inhalt wurde $H_2$ bis zu einem Innendruck von 1,5 bar vorgelegt, 40 $dm^3$ flüssiges Propylen eingefüllt und nacheinander 200 mmol Triethylaluminium, 40 mmol Diphenyldimethoxysilan und 4,53 $cm^3$ der oben beschriebenen Kontaktsuspension (entspricht 0,08 mmol Ti) eindosiert. Nun wurde der Kesselinhalt auf 70 °C aufgeheizt und die Polymerisation des Propylens 80 min durchgeführt. Nach Absenken der Innentemperatur auf 60 °C innerhalb von 10 min wurde Ethylen eingeleitet und der Innendruck auf 32 bar eingestellt. Dieser Druck wurde während der restlichen 50 min Reaktionszeit durch Nachspeisen von Ethylen aufrechtgehalten.
Man erhielt 0,75 kg Blockcopolymer.
Das Polymer besaß eine VZ von 138. 5,7 Gew.-% des Polymeren waren durch Polymerisation von Ethylen entstanden. Durch Umkristallisation aus dem Benzingemisch wurden 94 % kristallisierbare Anteile, bezogen auf das gesamte Polymer, mit einem Ethylengehalt von 3,0 Gew.-% und einer VZ von 139 erhalten. Aus der Mutterlauge erhielt man durch Fällen mit Aceton 6 %, bezogen auf das Blockcopolymer, einer kautschukartigen Masse mit 47 Gew.-% Ethylengehalt und einer VZ von 79.
In der aus der Differentialthermoanalyse erhaltenen Enthalpiekurve (-180 bis 200 °C, Heizrate 2 K/min) war unterhalb des Temperaturnullpunktes eine Glasumwandlung in dem Temperaturbereich von -56 bis -25 °C zu beobachten.

Das Polymere besaß einen MFI 230/2,16 von 230 g/10 min,bei -40 °C eine Kerbschlagzähigkeit von 0,9 $mJ/mm^2$ und bei -60 °C eine Kerbschlagzähigkeit von 0,6 $mJ/mm^2$.

**Patentansprüche**

**1.** Verfahren zur Herstellung einer Polypropylen-Formmasse, bestehend aus
(1) 20 bis 99 Gew.-% eines kristallinen, isotaktischen Polymers, welches zu mindestens 95 Gew.-% aus polymerisiertem Propylen besteht,
(2) 1 bis 80 Gew.-% eines nicht kristallinen Ethylen-Propylen-Copolymeren mit einem Ethylengehalt von 20 bis 90 Gew.-%,
wobei man zunächst in einer oder mehreren Stufen in flüssigem Propylen bei einer Verweilzeit von 15 bis 400 Minuten, einem Druck von 5 bis 100 bar und einer Temperatur von 0 bis 100 °C das Polymer (1) und in einer zweiten Stufe bei einer Verweilzeit von 10 bis 180 Minuten, einem Druck von 5 bis 49 bar und einer Temperatur von 0 bis 100 °C in Gegenwart von Ethylen das Polymer (2) herstellt, in Gegenwart eines Katalysators, welcher aus einer Übergangsmetallverbindung und einer aluminiumorganischen Verbindung besteht, dadurch gekennzeichnet, daß die Polymerisation in der zweiten Stufe in Lösung oder in Suspension stattfindet und daß die Übergangsmetallverbindung ein Metallocen der Formel I

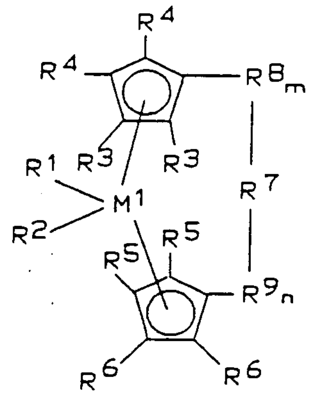

(I)

ist, worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_{1-10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$, $R^4$, $R^5$ und $R^6$ | gleich oder verschieden sind und ein Wasserstoffatom, ein Halogenatom, eine $C_1$-$C_{10}$-Alkylgruppe, $-NR^{10}_2$ , $-SR^{10}$, $-OSiR^{10}_3$ , $-SiR^{10}_3$ oder $PR^{10}_2$ , worin $R^{10}$ ein Halogenatom oder eine $C_1$-$C_{10}$-Alkylgruppe ist, bedeuten, oder je zwei benachbarte $R^3$, $R^4$, $R^5$ oder $R^6$ mit den sie verbindenden C-Atomen ein Ring bilden, |
| $R^7$ | |

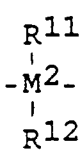, 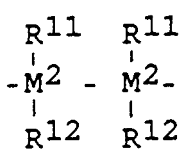, 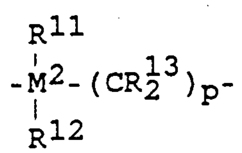, 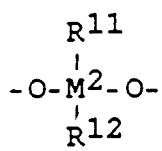, 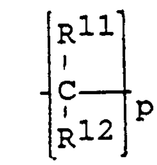

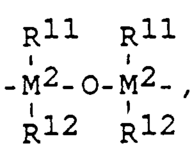, 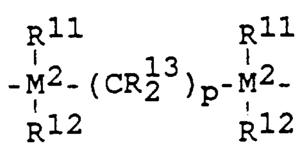, 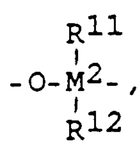, 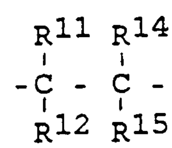,

| | |
|---|---|
| | $=BR^{11}$, $=AlR^{11}$, -Ge-, -Sn-, -O-, -S-, $=S=O$, $=SO_2$, $=NR^{11}$, $=CO$, $=PR^{11}$ oder $=P(O)R^{11}$ ist, wobei |
| $R^{11}$, $R^{12}$, $R^{13}$, $R^{14}$ und $R^{15}$ | gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silicium, Germanium oder Zinn ist, |
| p | 1, 2 oder 3 ist, |
| $R^8$ und $R^9$ | gleich oder verschieden sind und eine Gruppe $=CR^{11}R^{12}$, worin $R^{11}$ und $R^{12}$ die obengenannte Bedeutung haben, bedeuten und |
| m und n | gleich oder verschieden und null, 1 oder 2 sind, wobei m + n null, 1 oder 2 ist, |

und die aluminiumorganische Verbindung ein Aluminoxan der Formel II ist

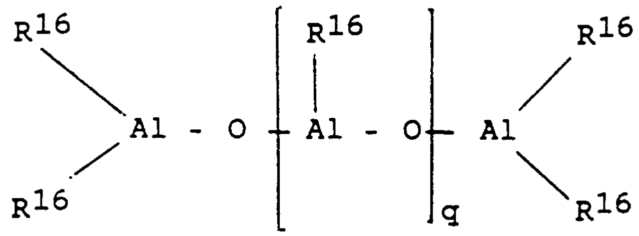

(II)

für den linearen Typ und/oder der Formel III

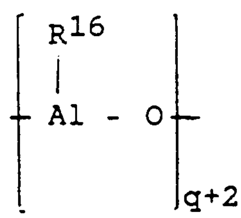

(III)

für den cyclischen Typ, worin $R^{16}$ eine $C_1$-$C_6$-Alkylgruppe, und q eine ganze Zahl von 2 bis 50, bedeuten.

**2.** Verfahren nach Anspruch 1, dadurch gekennzeichnet, daß bei der Herstellung der Polymeren (1) und (2) bis zu 5 Mol-% eines 1-Olefins mit 4 bis 10 C-Atomen zusätzlich eingesetzt werden.

**3.** Polypropylen-Formmasse, herstellbar nach dem Verfahren nach Anspruch 1 oder 2.

**4.** Verwendung der nach Anspruch 1 oder 2 herstellbaren Polypropylen-Formmasse zur Herstellung von Formkörpern.

## Claims

**1.** A process for the preparation of a polypropylene molding composition consisting of

(1) 20 to 99 % by weight of a crystalline, isotactic polymer which consists to the extent of at least 95 % by weight of polymerized propylene and

(2) 1 to 80 % by weight of a non-crystalline ethylene-propylene copolymer having an ethylene content of 20 to 90 % by weight,

in which first the polymer (1) is prepared in one or more stages in liquid propylene over a residence time of 15 to 400 minutes, under a pressure of 5 to 100 bar and at a temperature of 0 to 100 °C, and the polymer (2) is prepared in a second stage over a residence time of 10 to 180 minutes, under a pressure of 5 to 49 bar and at a temperature of 0 to 100 °C in the presence of ethylene, in the presence of a catalyst which consists of a transition metal compound and an organoaluminum compound, which comprises carrying out the polymerization in the second stage in solution or in suspension, and using a transition metal compound which is a metallocene of the formula I

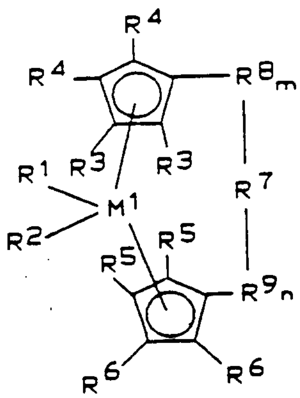

(I)

in which

M[1] is a metal of group IVb, Vb or VIb of the periodic table,

$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$, $R^4$, $R^5$ and $R^6$ are identical or different and are a hydrogen atom, a halogen atom, a $C_1$-$C_{10}$-alkyl group, $-NR^{10}_2$, $-SR^{10}$, $-OSiR^{10}_3$, $-SiR^{10}_3$ or $PR^{10}_2$, in which $R^{10}$ is a halogen atom or a $C_1$-$C_{10}$-alkyl group, or in each case two adjacent $R^3$, $R^4$, $R^5$ or $R^6$ form a ring with the carbon atoms joining them,

$R^7$ is

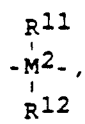, 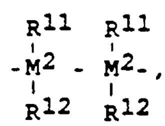, 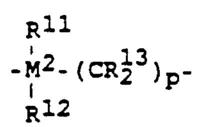, 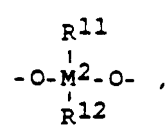, 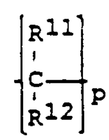

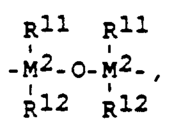, 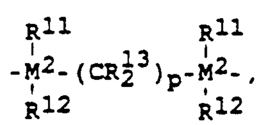, 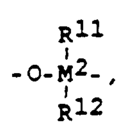, 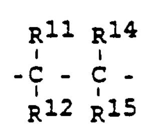,

$=BR^{11}$, $=AlR^{11}$, -Ge-, -Sn-, -O-, -S-, $=S=O$, $=SO_2$, $=NR^{11}$, $=CO$, $=PR^{11}$ or $=P(O)R^{11}$, in which

$R^{11}$, $R^{12}$, $R^{13}$, $R^{14}$ and $R^{15}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$ form a ring, in each case with the atoms joining them,

$M^2$ is silicon, germanium or tin,

p is 1, 2 or 3,

$R^8$ and $R^9$ are identical or different and are a group $=CR^{11}R^{12}$, in which $R^{11}$ and $R^{12}$ have the abovementioned meaning,

and

m and n are identical or different and are zero, 1 or 2, m + n being zero, 1 or 2,

and an organoaluminum compound which is an aluminoxane of the formula II

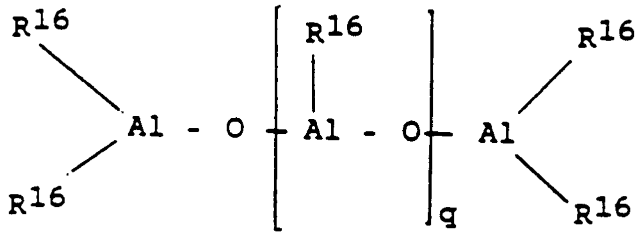

(II)

for the linear type and/or of the formula III

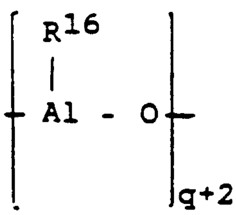

(III)

for the cyclic type, in which $R^{16}$ is a $C_1$-$C_6$-alkyl group and q is an integer from 2 to 50.

2. The process as claimed in claim 1, wherein up to 5 mol % of a 1-olefin having 4 to 10 carbon atoms are additionally employed in the preparation of the polymers (1) and (2).

3. A polypropylene molding composition which can be prepared by the process as claimed in claim 1 or 2.

4. The use of the polypropylene molding composition which can be prepared as claimed in claim 1 or 2 for the production of shaped articles.

**Revendications**

1. Procédé pour la préparation d'une masse de moulage de polypropylène composée de :
   (1) de 20 à 99 % en poids d'un polymère isotactique cristallin qui se compose d'au moins 95 % en poids de propylène polymérisé,
   (2) de 1 à 80 % en poids d'un copolymère de l'éthylène-propylène non cristallin ayant une teneur en éthylène de 20 à 90 % en poids,

   en préparant d'abord en une ou plusieurs étapes dans le propylène liquide, avec un temps de séjour de 15 à 400 minutes, une pression de 5 à 100 bars et à une température de 0 à 100 °C, le polymère (1) et dans une deuxième étape, avec un temps de séjour de 10 à 180 minutes, une pression de 5 à 49 bars et à une température de 0 à 100 °C, en présence de l'éthylène, le polymère (2), en suspension, en présence d'un catalyseur, qui est constitué d'un composé de métal de transition et d'un composé organoaluminié, caractérisé en ce que la polymérisation a lieu dans la deuxième étape en solution ou en suspension, en ce que le composé de métal de transition est un métallocène de formule I

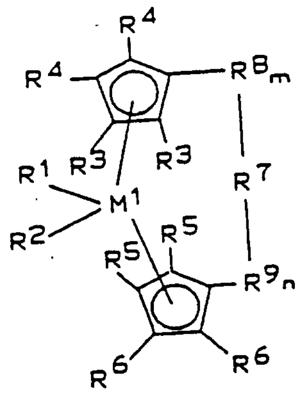

(I)

où

| | |
|---|---|
| $M^1$ | est un métal du groupe IVb, Vb ou VIb de la Classification Périodique des Éléments, |
| $R^1$ et $R^2$ | sont identiques ou différents et représentent un hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène, |
| $R^3$, $R^4$, $R^5$ et $R^6$ | sont identiques ou différents et représentent un atome d'hydrogène, un atome d'halogène, un groupe alkyle en $C_1$-$C_{10}$, $-NR_2^{10}$ ,$-SR^{10}$, $-OSiR_3^{10}$ , $-SiR_3^{10}$ ou $PR_2^{10}$ , où $R^{10}$ est un atome d'halogène ou un groupe alkyle en $C_1$-$C_{10}$, ou chaque fois deux $R^3$, $R^4$, $R^5$ ou $R^6$ voisins forment, avec les atomes de carbone qui les relient, un cycle, |
| $R^7$ | est |

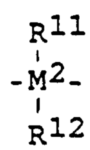,
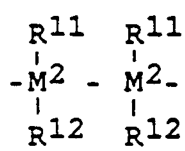,
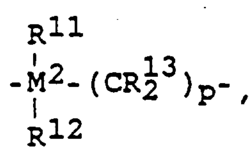,
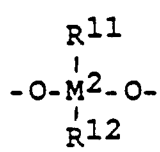,
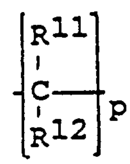

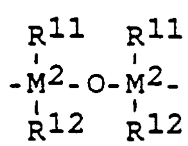,
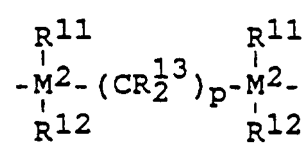,
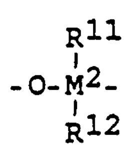,
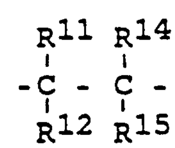,

| | |
|---|---|
| | $=BR^{11}$, $=AlR^{11}$, -Ge-, -O-, -S-, $=S=O$, $=SO_2$, $=NR^{11}$, $=CO$, $=PR^{11}$ ou $=P(O)R^{11}$, |
| $R^{11}$, $R^{12}$, $R^{13}$, $R^{14}$ et $R^{15}$ | étant identiques ou différents et représentent un atome d'hydrogène, un atome d'halogène, un groupe alkyle en $C_1$-$C_{10}$, un groupe fluoralkyle en $C_1$-$C_{10}$, un groupe aryle en $C_6$-$C_{10}$, un groupe fluoraryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$ ou $R^{11}$ et $R^{12}$ ou $R^{11}$ et $R^{13}$ forment chaque fois avec les atomes qui les relient un cycle, |
| $M^2$ | est le silicium, le germanium ou l'étain, |
| p | vaut 1, 2 ou 3, |
| $R^8$ et $R^9$ | sont identiques ou différents et représentent un groupe $=CR^{11}R^{12}$, où $R^{11}$ et $R^{12}$ ont la signification donnée ci-dessus, |

et

m et n sont identiques ou différents et sont 0, 1 ou 2, m + n étant 0, 1 ou 2, et le composé organoaluminié est un aluminoxane de formule II :

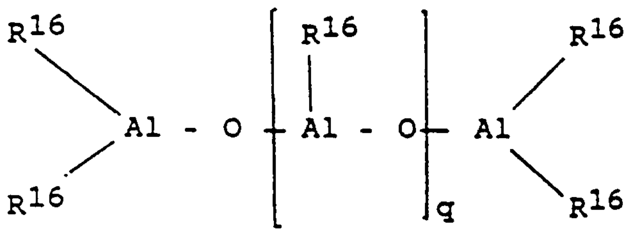

(II)

pour le type linéaire et/ou de formule III :

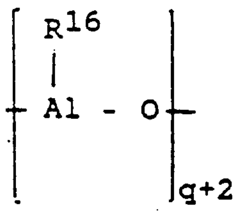

(III)

pour le type cyclique, où $R^{16}$ représente un groupe alkyle en $C_1$-$C_6$ et q est un nombre entier de 2 à 50.

**2.** Procédé selon la revendication 1, caractérisé en ce que dans la préparation des polymères (1) et (2) on utilise de plus jusqu'à 5 mole-% d'une 1-oléfine avec 4 à 10 atomes de carbone.

**3.** Masse de moulage de polypropylène que l'on peut préparer selon le procédé conforme à la revendication 1 ou 2.

**4.** Utilisation de la masse de moulage de polypropylène que l'on peut préparer selon la revendication 1 ou 2 pour la préparation d'objets moulés.